# EUROPÄISCHE PATENTSCHRIFT

(11) **EP 3 568 622 B1**
(45) Veröffentlichungstag und Bekanntmachung des Hinweises auf die Patenterteilung: **21.12.2022**
(21) Anmeldenummer: 18704146.2
(22) Anmeldetag: 16.01.2018
(51) Int. Cl.: F16K 31/145, F16K 11/00

(54) **VENTIL FÜR EINEN UNTERPUTZEINBAUKÖRPER EINER SANITÄRARMATUR MIT EINEM DREHBAR AN EINEM VENTILKNOPF BEFESTIGTEN BETÄTIGUNGSKNOPF**
VALVE FOR A FLUSH-MOUNTED BODY OF A SANITARY FITTING, HAVING A CONTROL KNOB ROTATABLY FASTENED TO A VALVE KNOB
SOUPAPE POUR CORPS ENCASTRÉ DE ROBINETTERIE SANITAIRE MUNIE D'UN BOUTON DE MANOEUVRE FIXÉ ROTATIF À UN BOUTON DE SOUPAPE

(30) Priorität: 16.01.2017 DE 102017100709
(43) Veröffentlichungstag der Anmeldung: 20.11.2019
(73) Patentinhaber: Grohe AG, 58653 Hemer (DE)
(72) Erfinder: TOYODA, Yukiko, 58675 Hemer (DE)
(86) Internationale Anmeldenummer: PCT/EP2018/050961
(87) Internationale Veröffentlichungsnummer: WO 2018/130709

(56) Entgegenhaltungen:
- EP-A1- 0 805 310
- EP-A1- 2 848 846
- EP-A2- 0 326 058
- GB-A- 2 088 021
- US-A- 3 590 860
- US-A1- 2015 115 183

## Beschreibung

Die vorliegende Erfindung betrifft ein Ventil für einen Unterputzeinbaukörper einer Sanitärarmatur. Solche Unterputzeinbaukörper sind innerhalb eines Mauerdurchbruchs, einer Vertiefung in einer Wand oder einem sonstigen Träger befestigbar. Insbesondere bei Einbauwänden und Vorwandsystemen haben sich solche Unterputzeinbaukörper bewährt.

Unterputzeinbaukörper dienen der Befestigung einer Funktionseinheit in einer Mauer, einer Wand oder einem Träger. Die Funktionseinheit kann eine Thermostatkartusche und ein Ventil umfassen. Mittels der Thermostatkartusche sind ein Kaltwasser und ein Warmwasser zu einem Mischwasser mit einer gewünschten Mischwassertemperatur mischbar, wobei eine Entnahmemenge des Mischwassers mittels des Ventils steuerbar ist. Hierzu sind ein Kaltwasseranschluss des Unterputzeinbaukörpers regelmäßig mit einem Kaltwasserhausanschluss und ein Warmwasseranschluss des Unterputzeinbaukörpers regelmäßig mit einem Warmwasserhausanschluss über entsprechende Rohrleitungen verbindbar. Weiterhin ist an dem Unterputzeinbaukörper zumindest eine Mischwasserleitung verbindbar, über die das Mischwasser der Sanitärarmatur, wie zum Beispiel einer Handbrause, Kopfbrause, Düse, Auslauf und/oder dergleichen an einer Dusche und/oder Badewanne, zuführbar ist. Das Mischwasser ist von der Thermostatkartusche über entsprechende Leitungen in der Funktionseinheit zumindest einem Ventil zuführbar, mittels dem eine Durchflussmenge der Flüssigkeit durch die Sanitärarmatur steuerbar ist. Bekannte Ventile für Unterputzeinbaukörper weisen einen Betätigungsknopf zum Öffnen und Schließen des Ventils auf, der sich innerhalb eines drehbaren Drehknopfs zur Einstellung einer Durchflussmenge der Flüssigkeit durch das Ventil befindet. Nachteilig an den bekannten Ventilen ist, dass der Betätigungsknopf beim Drehen des Drehknopfs mitgedreht wird, wenn ein Benutzer die Durchflussmenge der Flüssigkeit einstellt. Dies ist besonders nachteilig bei Betätigungsknöpfen, die beispielsweise mit einer Beschriftung oder sonstigen Kennzeichnungen versehen sind und die bei einer Drehung des Betätigungsknopfs nicht mehr ablesbar sind. Um ein Mitdrehen der Betätigungsknöpfe zu verhindern, sind bei bekannten Unterputzeinbaukörpern zusätzliche Komponenten zur drehfesten Positionierung des Betätigungsknopfs erforderlich, um eine Beschriftung des Betätigungsknopfs stets in einer horizontalen Ausrichtung zu halten. Die zusätzlichen Komponenten haben unter anderem zur Folge, dass das Ventil einen vergleichsweise großen Bauraum benötigt. Dies hat wiederum zur Folge, dass die Gestaltungsmöglichkeiten des Unterputzeinbaukörpers eingeschränkt werden. Weiterhin besteht bei den bekannten Ventilen das Problem, dass der Betätigungsknopf sich von dem Ventil lösen und abfallen kann. Diesbezüglich offenbart die Druckschrift US2015/0115183A1 ein System zum Einstellen der Strömungsrate von Wasser in einer Dusche, einem Badezimmer oder einer Küche. Ferner offenbart die Druckschrift US3590860 einen Druckregler für Flüssiggaskartuschen mit einem Druckknopf.

Aufgabe der Erfindung ist daher, die mit Bezug auf den Stand der Technik geschilderten Probleme zumindest teilweise zu lösen und insbesondere ein Ventil für einen Unterputzeinbaukörper einer Sanitärarmatur anzugeben, dessen Betätigungsknopf mit geringem Aufwand in einer horizontalen Ausrichtung haltbar und gegen ein unbeabsichtigtes Lösen sicherbar ist.

Diese Aufgaben werden gelöst mit einem Ventil gemäß den Merkmalen des unabhängigen Patentanspruchs. Weitere vorteilhafte Ausgestaltungen des Ventils sind in den abhängigen Patentansprüchen angegeben. Es ist darauf hinzuweisen, dass die in den abhängigen Patentansprüchen einzeln aufgeführten Merkmale wie beansprucht miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierfür trägt ein Ventil für einen Unterputzeinbaukörper einer Sanitärarmatur bei, das zumindest die Merkmale gemäß Anspruch 1 aufweist.

Das Ventil ist für einen Unterputzeinbaukörper vorgesehen, der insbesondere für Sanitärarmaturen verwendbar ist, die im Zusammenhang mit Duschen und/oder Badewannen zur Anwendung kommen. Bei den Sanitärarmaturen kann es sich insbesondere um Wasserausläufe, Handbrausen, Kopfbrausen, Düsen und/oder dergleichen handeln. Der Unterputzeinbaukörper dient insbesondere der Befestigung einer Funktionseinheit. Die Funktionseinheit umfasst insbesondere eine Thermostatkartusche. Mittels der Thermostatkartusche sind insbesondere ein Kaltwasser und ein Warmwasser zu einem Mischwasser mit einer gewünschten Mischwassertemperatur mischbar. Das Kaltwasser kann dabei eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Die Funktionseinheit ist insbesondere zumindest teilweise in einem Aufnahmeraum eines Gehäuses des Unterputzeinbaukörpers angeordnet und/oder ist im Wesentlichen zylinderförmig ausgebildet. Solche Unterputzeinbaukörper werden regelmäßig innerhalb eines Mauerdurchbruchs, einer Vertiefung in einer Wand oder einem sonstigen Träger befestigt. Das Ventil kann ebenfalls Bestandteil der Funktionseinheit sein. Das durch die Thermostatkartusche gemischte Mischwasser kann in der Funktionseinheit mit zumindest einer Leitung dem Ventil zugeführt werden, mittels dem eine Entnahmemenge des Mischwassers über die Sanitärarmatur steuerbar ist. Das Ventil weist ein Ventilgehäuse mit einer Längsachse auf. Mittels des Ventilgehäuses ist das Ventil insbesondere an beziehungsweise in der Funktionseinheit befestigbar. Weiterhin ist das Ventilgehäuse zumindest teilweise rohrförmig ausgebildet.

Weiterhin weist das Ventil ein um eine Drehachse drehbares Mengenregulierteil zur Einstellung der Durchflussmenge der Flüssigkeit durch das Ventil auf. Die Drehachse entspricht bevorzugt der Längsachse des Ventilgehäuses. Mittels des drehbaren Mengenregulierteils ist somit eine Entnahmemenge der Flüssigkeit beziehungsweise des Mischwassers über die Sanitärarmatur einstellbar. Das Mengenregulierteil ist insbesondere drehfest mit einem Drehknopf verbindbar, über den ein Benutzer das Mengenregulierteil zur Einstellung der Durchflussmenge der Flüssigkeit betätigen kann.

Darüber hinaus weist das Ventil einen Ventilknopf zum Öffnen und Schließen des Ventils auf, wobei der Ventilknopf mittels des Mengenregulierteils drehbar und parallel zu der Längsachse durch einen Betätigungsknopf für das Ventil verstellbar ist. Der Ventilknopf ist zum Öffnen und Schließen des Ventils insbesondere parallel zu der Längsachse mittels des Betätigungsknopfs zwischen zwei stabilen bzw. verrasteten Positionen verstellbar. In der ersten stabilen Position ist das Ventil zumindest teilweise geöffnet und in der anderen stabilen Position vollständig geschlossen. Der Betätigungsknopf befindet sich bevorzugt außerhalb des Unterputzeinbaukörpers und/oder ist insbesondere innerhalb des Drehknopfs angeordnet. Um zu verhindern, dass sich der Betätigungsknopf stets mit dem Ventilknopf beziehungsweise dem Drehknopf mitdreht, ist der Betätigungsknopf mittels einer Drehkupplung an dem Ventilknopf befestigt, sodass der Betätigungsknopf verdrehfest zu dem Ventilgehäuse befestigbar ist. Die verdrehfeste Befestigung des Betätigungsknopfs kann beispielsweise über eine mechanische Verbindung an das Ventilgehäuse und/oder an eine andere feststehende Komponente des Unterputzeinbaukörpers erfolgen. Hierdurch werden keine weiteren zusätzlichen Komponenten benötigt, die zusätzlichen Bauraum innerhalb des Unterputzeinbaukörpers erfordern. Durch die Befestigung des Betätigungsknopfs über die Drehkupplung an dem Ventilknopf kann sich der Betätigungsknopf zudem auch nicht unbeabsichtigt lösen.

Zudem ist es vorteilhaft, wenn die Drehkupplung als Schnappverbindung ausgebildet ist. Hierzu kann der Betätigungsknopf oder eine Komponente des Betätigungsknopfs beispielsweise (ggf. mehrere) Schnapparme, Klauen, Haken oder dergleichen aufweisen, die in den Ventilknopf einrastbar sind. Die Schnappverbindung ist dabei derart ausgebildet, dass der Ventilknopf unabhängig von dem Betätigungsknopf drehbar ist.

Erfindungsgemäß ist der Betätigungsknopf mit einem zum Ventilgehäuse verdrehfesten Gewindeschaft an dem Ventilknopf befestigt.

"Verdrehfest" bedeutet hierbei insbesondere, dass eine Verdrehung der Bauteile zueinander im montierten Zustand unterbunden beziehungsweise verhindert ist. Der Betätigungsknopf ist auf den Gewindeschaft insbesondere zum Ausgleich unterschiedlicher Einbautiefen des Unterputzeinbaukörpers aufschraubbar.

Weiterhin ist es vorteilhaft, wenn das Ventil eine Außengewindespindel aufweist, die relativ zu dem Ventilgehäuse verdrehfest ist und mittels des Betätigungsknopfs zum Öffnen und Schlie-ßen des Ventils (nur) parallel zu der Längsachse verstellbar ist. Die Außengewindespindel ist insbesondere zylinderförmig ausgebildet und weist an einem ersten längsseitigen Ende ein Au-ßengewinde auf. Das Außengewinde ist insbesondere nicht vollständig um den gesamten Umfang der Außengewindespindel ausgebildet, sondern weist an seiner Umfangsfläche bevorzugt zumindest zwei Gewindebereiche auf, die voneinander durch gewindefreie Bereiche beabstandet sind. Das Außengewinde kann dazu genutzt werden, die (axiale) Relativlage der Außengewindespindel zu benachbarten Bauteilen einzustellen beziehungsweise im Rahmen der Montage fest vorzugeben.

Weiterhin ist es vorteilhaft, wenn die Außengewindespindel in einer Nut einer Führung geführt ist. Die Führung ist relativ zu dem Ventilgehäuse insbesondere weder drehbar noch parallel zu der Längsachse verstellbar. Die Außengewindespindel ist in der Nut insbesondere parallel zu der Längsachse des Ventilgehäuses führbar. Die Führung weist insbesondere eine tellerförmige Basis auf, die sich in einer radialen Richtung des Ventilgehäuses erstreckt. Von der tellerförmigen Basis erstreckt sich die Nut parallel zu der Längsachse, wobei die Nut insbesondere durch zwei Nutfinger gebildet wird. Das Außengewinde der Außengewindespindel erstreckt sich insbesondere aus der Nut in der radialen Richtung heraus.

Weiterhin ist es vorteilhaft, wenn die Außengewindespindel mittels einer durch das Mengenregulierteil drehbaren Innengewindespindel zur Einstellung der Durchflussmenge der Flüssigkeit parallel zu der Längsachse verstellbar ist. Die Innengewindespindel kann zumindest teilweise rohrförmig ausgebildet sein, wobei ein Innengewinde an einer inneren Umfangsfläche der Innengewindespindel ausgebildet ist. Das Innengewinde der Innengewindespindel greift insbesondere in das Außengewinde der Außengewindespindel ein, sodass die Außengewindespindel durch eine Drehung der Innengewindespindel parallel zu der Längsachse des Ventilgehäuses verstellbar ist. Weiterhin ist die Innengewindespindel verdrehfest mit dem Ventilknopf und/oder dem Mengenregulierteil verbunden. Hierzu kann zwischen der Innengewindespindel und dem Ventilknopf beispielsweise eine Verzahnung ausgebildet sein, wobei die einzelnen Zähne der Verzahnung insbesondere parallel zu der Längsachse ausgerichtet sind. Somit ist die Außengewindespindel durch eine Drehung des Drehknopfs beziehungsweise des Mengenregulierteils drehbar. Weiterhin ist die Innengewindespindel durch den Ventilknopf parallel zu der Längsachse verstellbar, wenn der Betätigungsknopf durch einen Benutzer gedrückt wird. Hierzu kann die Innengewindespindel zumindest eine Verbindungsnase aufweisen, die in den Ventilknopf eingreift. Hierdurch sind die Gewindespindel und der Ventilknopf insbesondere formschlüssig miteinander verbunden.

Zudem ist es vorteilhaft, wenn der Betätigungsknopf durch die Außengewindespindel verdrehfest zu dem Ventilgehäuse gehalten ist. Zu diesem Zweck ist die Außengewindespindel insbesondere verdrehfest in der Nut der Führung positioniert und führbar. Die Außengewindespindel kann hierzu zudem insbesondere im Bereich des Außengewindes einen mehreckigen, viereckigen oder rechteckigen Querschnitt aufweisen, dessen Außenkontur in den gewindefreien Bereichen insbesondere einer Innenkontur der Nut entsprechen kann.

Ebenfalls vorteilhaft ist es, wenn die Außengewindespindel formschlüssig in einen Gewindeschaft des Betätigungsknopfs eingreift, sodass der Gewindeschaft verdrehfest zu dem Ventilgehäuse gehalten ist. Hierzu erstreckt sich insbesondere ein zweites längsseitiges Ende der Außengewindespindel parallel zu der Längsachse aus der Nut der Führung in eine Öffnung des Gewindeschafts. Das zweite längsseitige Ende der Außengewindespindel kann ebenfalls einen mehreckigen, viereckigen oder rechteckigen Querschnitt aufweisen, dessen Außenkontur im Wesentlichen einer Innenkontur der Öffnung des Gewindeschafts entspricht.

Vorzugsweise weist das Ventil eine Spindel für einen Regulierkörper für die Flüssigkeit beziehungsweise das Mischwasser auf, wobei die Spindel durch die Außengewindespindel parallel zu der Längsachse verstellbar ist. Die Spindel kann ebenfalls zumindest teilweise in der Nut der Führung angeordnet sein und/oder kontaktiert die Außengewindespindel, sodass die Spindel bei einer Bewegung der Außengewindespindel parallel zu der Längsachse verstellbar ist. An einem der Außengewindespindel gegenüberliegenden Ende der Spindel ist die Spindel bevorzugt mit dem Regulierkörper des Ventils verbunden, über den die Durchflussmenge der Flüssigkeit durch das Ventil steuerbar ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: das Ventil in einem Längsschnitt;
- Fig. 2:: das Ventil um 90° um eine Längsachse gedreht in einem Längsschnitt;
- Fig. 3:: ein Mengenregulierteil des Ventils in einer perspektivischen Darstellung;
- Fig. 4:: einen Ventilknopf des Ventils in einer perspektivischen Darstellung;
- Fig. 5:: einen Gewindeschaft eines Betätigungsknopfs in einer perspektivischen Darstellung;
- Fig. 6:: eine Außengewindespindel des Ventils in einer perspektivischen Darstellung;
- Fig. 7:: eine Innengewindespindel des Ventils in einer perspektivischen Darstellung;
- Fig. 8:: eine Spindel des Ventils in einer perspektivischen Darstellung; und
- Fig. 9:: eine Führung für die Außengewindespindel des Ventils in einer perspektivischen Darstellung.

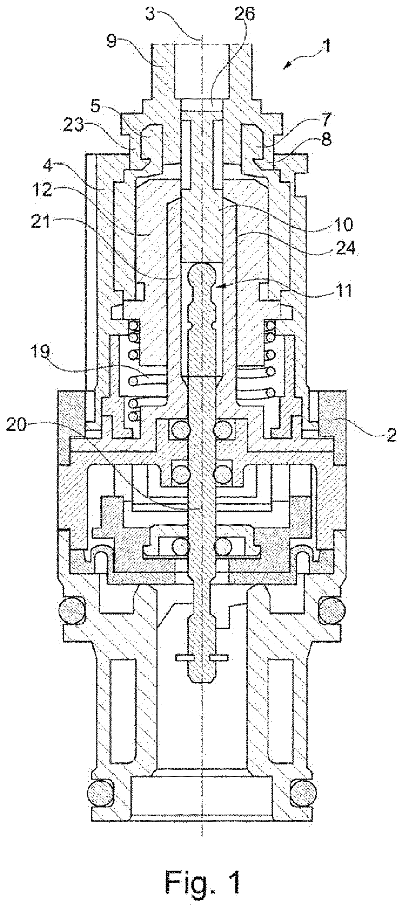

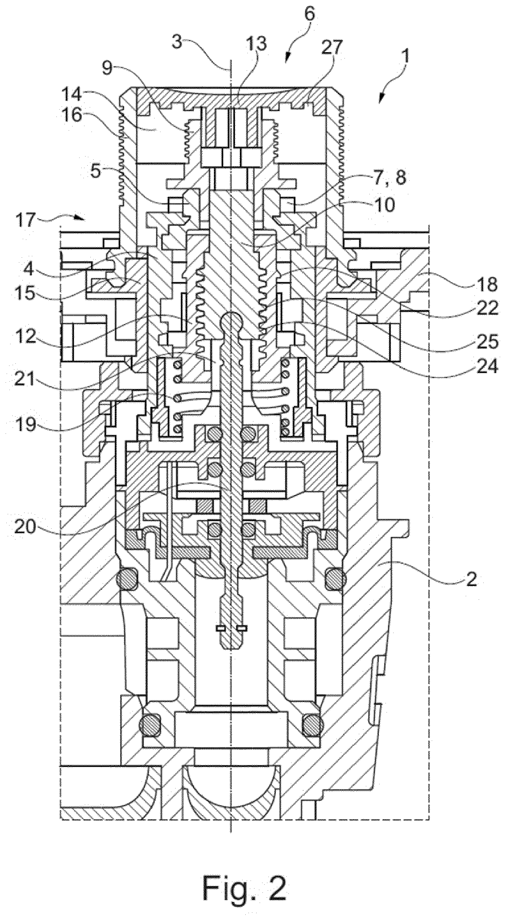

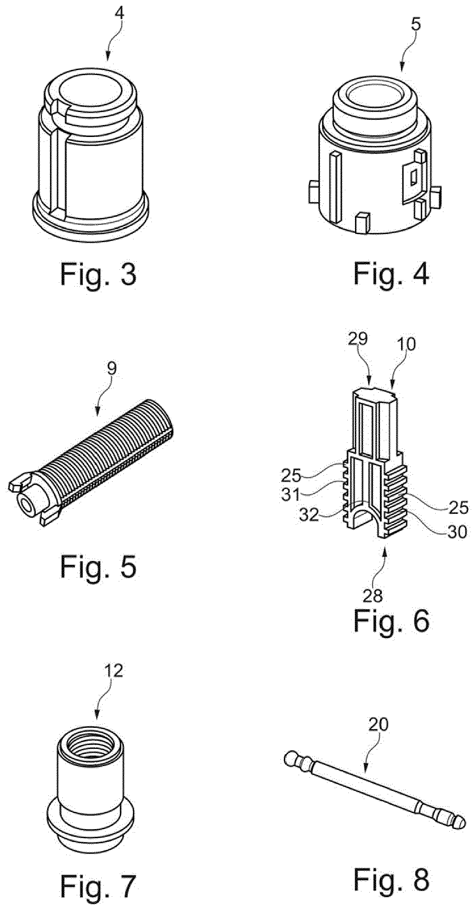

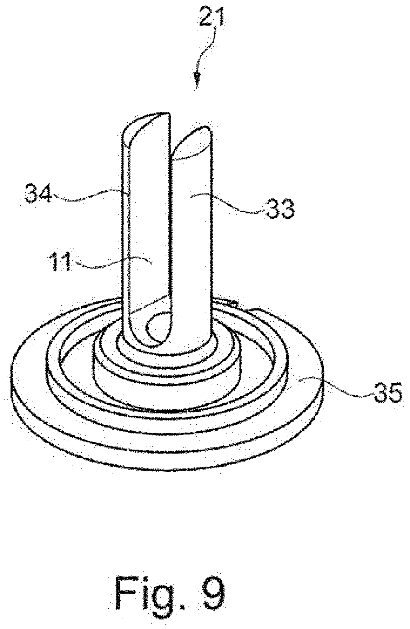

Die Fig. 1 zeigt ein Ventil 1 für einen (hier nicht dargestellten) Unterputzeinbaukörper einer Sanitärarmatur in einem Längsschnitt. Das Ventil 1 weist ein Ventilgehäuse 2 mit einer Längsachse 3 auf. An dem Ventilgehäuse 2 ist ein Mengenregulierteil 4 zur Einstellung einer Durchflussmenge einer Flüssigkeit durch das Ventil 1 drehbar gehalten. Weiterhin ist das Mengenregulierteil 4 um eine Drehachse drehbar, die der Längsachse 3 entspricht. Das Mengenregulierteil 4 ist in der Fig. 3 in einer perspektivischen Darstellung gezeigt. Weiterhin weist das Ventil 1 einen Ventilknopf 5 zum Öffnen und Schließen des Ventils 1 auf, der in der Fig. 4 in einer perspektivischen Darstellung gezeigt ist. Der Ventilknopf 5 kann mittels einer Feder 19 vorgespannt gelagert sein. Der Ventilknopf 5 ist in dem rohrförmigen Mengenregulierteil 4 angeordnet und mit dem Mengenregulierteil 4 drehfest verbunden. Zudem ist der Ventilknopf 5 über einen Gewindeschaft 9 eines in der Fig. 3 gezeigten Betätigungsknopfs 6 parallel zu der Längsachse 3 verstellbar. Der Gewindeschaft 9 ist mit dem Ventilknopf 5 über eine Drehkupplung 7 verbunden, die hier nach Art einer Schnappverbindung 8 ausgebildet ist. Hierzu weist der Gewindeschaft 9 Schnappbeine 23 auf, die in den Ventilknopf 5 einrastbar sind. Der Gewindeschaft ist in der Fig. 5 in einer perspektivischen Darstellung dargestellt. Der Ventilknopf 5 ist mittels des Mengenregulierteils 4 und eines in der Fig. 2 gezeigten Drehknopfs 17 um die Längsachse 3 drehbar. Der Ventilknopf 5 ist ebenfalls rohrförmig beziehungsweise topfförmig ausgebildet, wobei innerhalb des Ventilknopfs 5 eine Innengewindespindel 12 angeordnet ist, die in der Fig. 7 in einer perspektivischen Darstellung gezeigt ist. Die Innengewindespindel 12 ist mittels des Mengenregulierteils 4 um die Längsachse 3 drehbar und mittels des Ventilknopfs 5 parallel zu der Längsachse 3 verstellbar. Die Innengewindespindel 12 weist ein Innengewinde 24 auf, das in ein in den Fig. 2 und 6 gezeigtes Außengewinde 25 einer Außengewindespindel 10 eingreift. Die Außengewindespindel 10 ist hierdurch durch ein Drehen des Mengenregulierteils 4 oder ein Drücken des Ventilknopfs 5 über den Gewindeschaft 9 parallel zu der Längsachse 3 in einer Nut 11 einer Führung 21 verstellbar, die in der Fig. 9 in einer perspektivischen Darstellung gezeigt ist. Durch die Verstellung der Außengewindespindel 10 ist eine Spindel 20 parallel zu der Längsachse 3 bewegbar, die ebenfalls zumindest teilweise in der Nut 11 der Führung 21 angeordnet und in der Fig. 8 in einer perspektivischen Darstellung gezeigt ist. Die Spindel 20 ist an einem der Außengewindespindel 10 gegenüberliegenden längsseitigen Ende mit einem hier nicht gezeigten Regulierkörper verbunden. Die Außengewindespindel 10 ist in der Nut 11 gegenüber der Führung 21 und dem Ventilgehäuse 2 verdrehfest geführt. Die Außengewindespindel 10 ragt zudem in eine Öffnung 26 des Gewindeschafts 9, sodass der Gewindeschaft 9 ebenfalls verdrehfest zu dem Ventilgehäuse 2 gehalten ist.

Die Fig. 2 zeigt das Ventil 1 im Vergleich zur Fig. 1 in einer um 90° um die Längsachse 3 gedrehten Position in einem Längsschnitt. Zudem ist in der Fig. 2 ein Betätigungsknopf 6 und ein Drehknopf 17 mit dem Ventil 1 verbunden. Der Betätigungsknopf 6 umfasst ein auf den Gewindeschaft 9 geschraubtes Zwischenteil 14, dessen Position an dem Gewindeschaft 9 mittels einer Abdeckkappe 13 sicherbar ist. Hierzu weisen die Abdeckkappe 13 und das Zwischenteil 14 eine Stirnverzahnung 27 auf. Der Betätigungsknopf 6 befindet sich innerhalb des Drehknopfs 17. Der Drehknopf 17 umfasst ein an einer Trägerplatte 18 drehbar um die Längsachse 3 befestigtes Drehknopfoberteil 16 und ein mit dem Drehknopfoberteil 16 verdrehfest verbundenes Drehknopfunterteil 15 auf. Das Drehknopfunterteil 15 ist zudem verdrehfest mit dem Mengenregulierteil 4 verbunden. Weiterhin ist in der Fig. 2 eine Verbindungsnase 22 der Innengewindespindel 12 zu erkennen, die in den Ventilknopf 5 eingreift. Die Innengewindespindel 12 greift zudem mit ihrem Innengewinde 24 in das Außengewinde 25 der Außengewindespindel 10 ein, sodass die Außengewindespindel 10 durch ein Drücken des Betätigungsknopfs 6 oder durch ein Drehen des Drehknopfs 17 parallel zu der Längsachse 3 verstellbar ist.

Die Fig. 6 zeigt die Außengewindespindel 10 in einer perspektivischen Darstellung. Das Außengewinde 25 ist in einem ersten Gewindebereich 30 und in einem zweiten Gewindebereich 31 an einem ersten längsseitigen Ende 28 der Außengewindespindel 10 ausgebildet. Der erste Gewindebereich 30 und der zweite Gewindebereich 31 sind in einer Umfangsrichtung durch zwei gewindefreie Bereiche 32 unterbrochen, von denen hier nur ein gewindefreier Bereich 32 zu erkennen ist. Die gewindefreien Bereiche 32 kommen mit einem in der Fig. 9 gezeigten ersten Nutfinger 33 und zweiten Nutfinger 34 der Führung 21 zur Anlage. Die Außengewindespindel 10 weist zudem ein zweites längsseitiges Ende 29 auf, das in die in der Fig. 1 gezeigte Öffnung 26 des Gewindeschafts 9 eingesteckt wird.

Die Fig. 9 zeigt die Führung 21, wobei diese eine tellerförmige Basis 35 aufweist, von der sich parallel zu der in der Fig. 1 und 2 gezeigten Längsachse 3 der erste Nutfinger 33 und der zweite Nutfinger 34 erstrecken, zwischen denen die Nut 11 ausgebildet ist.

Das vorgeschlagene Ventil zeichnet sich durch einen zu einem Ventilgehäuse verdrehfesten Betätigungsknopf aus, der gegen ein ungewolltes Lösen von einem Ventilknopf des Ventils gesichert ist.

### Bezugszeichenliste

- 1: Ventil
- 2: Ventilgehäuse
- 3: Längsachse
- 4: Mengenregulierteil
- 5: Ventilknopf
- 6: Betätigungsknopf
- 7: Drehkupplung
- 8: Schnappverbindung
- 9: Gewindeschaft
- 10: Außengewindespindel
- 11: Nut
- 12: Innengewindespindel
- 13: Abdeckkappe
- 14: Zwischenteil
- 15: Drehknopfunterteil
- 16: Drehknopfoberteil
- 17: Drehknopf
- 18: Trägerplatte
- 19: Feder
- 20: Spindel
- 21: Führung
- 22: Verbindungsnase
- 23: Schnappbeine
- 24: Innengewinde
- 25: Außengewinde
- 26: Öffnung
- 27: Stirnverzahnung
- 28: erstes längsseitiges Ende
- 29: zweites längsseitiges Ende
- 30: erster Gewindebereich
- 31: zweiter Gewindebereich
- 32: gewindefreier Bereich
- 33: erster Nutfinger
- 34: zweiter Nutfinger
- 35: Basis

## Patentansprüche

1. Ventil (1) für einen Unterputzeinbaukörper einer Sanitärarmatur, zumindest aufweisend:
- ein Ventilgehäuse (2) mit einer Längsachse (3),
- ein drehbares Mengenregulierteil (4) zur Einstellung einer Durchflussmenge einer Flüssigkeit durch das Ventil (1), und
- einen Ventilknopf (5) zum Öffnen und Schließen des Ventils (1), wobei der Ventilknopf (5) mittels des Mengenregulierteils (4) drehbar und parallel zu der Längsachse (3) durch einen Betätigungsknopf (6) für das Ventil (1) verstellbar ist und wobei der Betätigungsknopf (6) mittels einer Drehkupplung (7) an dem Ventilknopf (5) befestigt ist, sodass der Betätigungsknopf (6) verdrehfest zu dem Ventilgehäuse (2) befestigbar ist, wobei der Betätigungsknopf (6) mit einem zum Ventilgehäuse (2) verdrehfesten Gewindeschaft (9) an dem Ventilknopf (5) befestigt ist.

2. Ventil (1) nach Patentanspruch 1, wobei die Drehkupplung (7) als Schnappverbindung (8) ausgebildet ist.

3. Ventil (1) nach einem der vorhergehenden Patentansprüche, aufweisend eine Außengewindespindel (10), die relativ zu dem Ventilgehäuse (2) verdrehfest ist und mittels des Betätigungsknopfs (6) zum Öffnen und Schließen des Ventils (1) parallel zu der Längsachse (3) verstellbar ist.

4. Ventil (1) nach Patentanspruch 3, wobei die Außengewindespindel (10) in einer Nut (11) einer Führung (21) geführt ist.

5. Ventil (1) nach Patentanspruch 3 oder 4, wobei die Außengewindespindel (10) mittels einer durch das Mengenregulierteil (4) drehbaren Innengewindespindel (12) zur Einstellung der Durchflussmenge der Flüssigkeit parallel zu der Längsachse (3) verstellbar ist.

6. Ventil (1) nach Patentanspruch 5, wobei die Innengewindespindel (12) verdrehfest mit dem Ventilknopf (5) verbunden und durch den Ventilknopf (5) parallel zu der Längsachse (3) verstellbar ist.

7. Ventil (1) nach einem der Patentansprüche 3 bis 6, wobei der Betätigungsknopf (6) durch die Außengewindespindel (10) verdrehfest zu dem Ventilgehäuse (2) gehalten ist.

8. Ventil (1) nach Patentanspruch 7, wobei die Außengewindespindel (10) formschlüssig in den Gewindeschaft (9) des Betätigungsknopfs (6) eingreift, sodass der Gewindeschaft (9) verdrehfest zu dem Ventilgehäuse (2) gehalten ist.

9. Ventil (1) nach einem der Patentansprüche 3 bis 8, aufweisend eine Spindel (20) für einen Regulierkörper für die Flüssigkeit, wobei die Spindel (20) durch die Außengewindespindel (10) parallel zu der Längsachse (3) verstellbar ist.

## Claims

1. A valve (1) for a flush-mounted body of a sanitary fitting, comprising at least:
- a valve body (2) with a longitudinal axis (3),
- a rotatable flow control element (4) for adjusting a flow volume of a liquid through the valve (1), and
- a valve knob (5) for opening and closing the valve (1), wherein the valve knob (5) is rotatably adjustable parallel to the longitudinal axis (3) by a control knob (6) for the valve (1) by means the flow control element (4), and wherein the control knob (6) is attached to the valve knob (5) by means of a rotary coupling (7) so that the control knob (6) can be attached relative to the valve housing (2) in a rotationally fixed manner, wherein the control knob (6) is attached to the valve knob (5) by a threaded shaft (9) that is rotationally fixed relative to the valve housing (2) .

2. The valve (1) according to claim 1, wherein the rotary coupling (7) is designed as a snap connection (8).

3. The valve (1) according to any one of the preceding claims, comprising an externally threaded spindle (10) which is rotationally fixed relative to the valve housing (2) and is adjustable parallel to the longitudinal axis (3) by means of the control knob (6) for opening and closing the valve (1).

4. The valve (1) according claim 3, wherein the externally threaded spindle (10) is guided in a groove (11) of a guide (21).

5. The valve (1) according to claim 3 or 4, wherein the externally threaded spindle (10) is adjustable parallel to the longitudinal axis (3) by means of an internally threaded spindle (12) which can be rotated by the flow control element (4) to adjust the flow volume of the liquid.

6. The valve (1) according to claim 5, wherein the internally threaded spindle (12) is connected to the valve knob (5) in a rotationally fixed manner and is adjustable parallel to the longitudinal axis (3) by the valve knob (5).

7. The valve (1) according to any one of claims 3 to 6, wherein the control knob (6) is held by the externally threaded spindle (10) in a rotationally fixed manner relative to the valve housing (2).

8. The valve (1) according to claim 7, wherein the externally threaded spindle (10) positively engages in the threaded shaft (9) of the control knob (6) so that the threaded shaft (9) is held in a rotationally fixed manner relative to the valve housing (2).

9. The valve (1) according to any one of claims 3 to 8, comprising a spindle (20) for a regulating body for the liquid, wherein the spindle (20) is adjustable parallel to the longitudinal axis (3) by means of the externally threaded spindle (10).

## Revendications

1. Soupape (1), destinée à un élément à encastrer d'une robinetterie sanitaire, comportant au moins :
- un corps de soupape (2) pourvu d'un axe longitudinal (3),
- une pièce de régulation du volume (4) rotative, destinée à régler un débit d'un liquide à travers la soupape (1), et
- un bouton de soupape (5), destiné à ouvrir et à fermer la soupape (1), le bouton de soupape (5) étant ajustable en rotation et à la parallèle de l'axe longitudinal (3) au moyen de la pièce de régulation du volume (4) par un bouton d'actionnement (6) pour la soupape (1) et le bouton d'actionnement (6) étant fixé sur le bouton de soupape (5) au moyen d'un accouplement rotatif (7), de telle sorte que le bouton d'actionnement (6) puisse se fixer de manière solidaire en rotation par rapport au corps de soupape (2), le bouton d'actionnement (6) étant fixé sur le bouton de soupape (5) par une tige filetée (9) solidaire en rotation avec le corps de soupape (2).

2. Soupape (1) selon la revendication 1, l'accouplement rotatif (7) étant conçu sous la forme d'une liaison par encliquetage (8).

3. Soupape (1) selon l'une quelconque des revendications précédentes, comportant une broche à filetage extérieur (10), qui est solidaire en rotation par rapport au corps de soupape (2) et qui est ajustable à la parallèle de l'axe longitudinal (3) au moyen du bouton d'actionnement (6), pour ouvrir et fermer la soupape (1).

4. Soupape (1) selon la revendication 3, la broche à filetage extérieur (10) étant guidée dans une rainure (11) d'un guidage (21).

5. Soupape (1) selon la revendication 3 ou 4, la broche à filetage extérieur (10) étant ajustable à la parallèle de l'axe longitudinal (3) au moyen d'une broche à taraudage (12) rotative par la pièce de régulation du volume (4), pour régler le débit du liquide.

6. Soupape (1) selon la revendication 5, la broche à taraudage (12) étant reliée de manière solidaire en rotation avec le bouton de soupape (5) et ajustable par le bouton de soupape (5) à la parallèle de l'axe longitudinal (3).

7. Soupape (1) selon l'une quelconque des revendications 3 à 6, le bouton d'actionnement (6) étant maintenu par la broche à filetage extérieur (10) de manière solidaire en rotation par rapport au corps de soupape (2) .

8. Soupape (1) selon la revendication 7, la broche à filetage extérieur (10) s'engageant par complémentarité de forme dans la tige filetée (9) du bouton d'actionnement (6), de sorte que la tige filetée (9) soit maintenue de manière solidaire en rotation par rapport au corps de soupape (2).

9. Soupape (1) selon l'une quelconque des revendications 3 à 8, comportant une broche (20) pour un élément régulateur, la broche (20) étant ajustable par la broche à filetage extérieur (10) à la parallèle de l'axe longitudinal (3).
